# EUROPÄISCHE PATENTANMELDUNG

(11) **EP 4 818 671 A1**
(43) Veröffentlichungstag der Anmeldung: **07.10.2026**
(21) Anmeldenummer: 26170421.7
(22) Anmeldetag: 02.04.2026
(51) Int. Cl.: G01M 17/02, G01N 3/56

(54) **PRÜFSTANDANORDNUNG ZUR ERMITTLUNG VON REIFEN- UND/ODER BREMSABRIEB**

(30) Priorität: 03.04.2025 AT 502352025
(71) Anmelder: AVL List GmbH, 8020 Graz (AT)
(72) Erfinder: Bigl, Stephan, 8075 Hart bei Graz (AT); Schubert, Ludwig, 8010 Graz (AT); Lex, Cornelia, 8041 Graz (AT); Heuberger, Daniel, 2630 Ternitz (AT); Sternat, Anton, 8082 Kirchbach (AT)

(57) **Zusammenfassung**

Um eine Verfälschung von Messungen durch Partikelverlust und/oder durch Partikeleintrag zu reduzieren und um eine Genauigkeit von Partikelmessergebnissen zu verbessern, wird eine Prüfstandanordnung (1), insbesondere zur Ermittlung von Reifen- und/Bremsabrieb eines zu prüfenden Reifens (6), vorgeschlagen, bei welcher ein von einer Einhausung (2) begrenzten Einhausungsinnenraum (3) auf Seiten einer zumindest eine um eine Rollendrehachse (9) drehbaren Prüfstandrolle (5) von einer eine Rollenausnehmung (4) zumindest teilweise verdeckenden Abdeckplatte (40) mit einer normal zu einer Reifendrehachse (7) und/oder normal zur Rollendrehachse (9) verlaufende Längsachse (40a) zumindest teilweise begrenzt wird. Dabei weist die Abdeckplatte (40) einen entlang der Längsachse (40a) verlaufenden Reifenaufnahmebereich (41) mit einer Ausnehmung (42) und an den Reifenaufnahmebereich (41) anschließende, in Richtung der Längsachse (40a) der Abdeckplatte (40) verlaufende und einander hinsichtlich des Reifenaufnahmebereichs (41) gegenüberliegende Seitenbereichen (43, 44) auf. Der Reifenaufnahmebereich (41) ist dabei gegenüber den Seitenbereichen (43, 44) vertieft ausgeführt und die Ausnehmung (42) gibt zumindest denjenigen Bereich der Rollenlauffläche (5a) frei, auf dem der zu prüfende Reifen (6) während der Durchführung eines Prüflaufs abrollt.

## Beschreibung

Die gegenständliche Erfindung betrifft eine Prüfstandanordnung, insbesondere zur Ermittlung von Reifen- und/oder Bremsabrieb, wobei die Prüfstandanordnung zumindest eine Einhausung aufweist, die einen Einhausungsinnenraum begrenzt, in welchem zumindest ein zu prüfender Reifen um eine Drehachse drehbar anordenbar ist. An der Einhausung sind eine Zuluftleitung zum Zuführen von Luft in den Einhausungsinnenraum und eine Abluftleitung zum Abführen von Luft aus dem Einhausungsinnenraum angeordnet, wobei die Abluftleitung zumindest mit einem Messgerät verbunden ist oder verbindbar ist. Weiterhin weist die Prüfstandanordnung zumindest eine um eine Rollendrehachse drehbare Prüfstandrolle auf, welche durch eine Rollenausnehmung in der Einhausung zumindest teilweise in den Einhausungsinnenraum hineinragt, und bei Durchführung eines Prüflaufs mit der Prüfstandanordnung der zu prüfende Reifen auf einer Rollenlauffläche der Prüfstandrolle abrollt. Der zu prüfende Reifen kontaktiert dabei die Prüfstandrolle an einer Reifenaufstandsfläche.

### Stand der Technik

Die Umweltbelastung mit Feinstaub durch Fahrzeuge, insbesondere durch Kraftfahrzeuge oder Lastkraftwagen, ist seit langem bekannt und unterliegt immer strengeren gesetzlichen Regulatorien. Dabei war der Fokus bislang hauptsächlich die durch den Verbrennungsvorgang in einem Verbrennungsmotor erzeugte Feinstaubbelastung, die über die Verbrennungsabgase in die Umwelt gelangen. Mittlerweise wurden aber auch andere Feinstaubquellen in einem Fahrzeug als problematisch identifiziert, die vermehrt in den Fokus geraten. Ein Beispiel hierfür ist die Bremsanlage eines Fahrzeugs, die durch Abrieb der Bremsscheibe und der Bremsbeläge während des Betriebs des Fahrzeugs Feinstaub erzeugt, der in die Umwelt gelangt und für die Feinstaubbelastung der Luft mitverantwortlich ist. Ein weiteres Beispiel einer Feinstaubquelle eines Fahrzeugs sind die Reifen, die im Betrieb des Fahrzeugs Reifenabrieb erzeugen, der ebenso als Feinstaub in die Umgebung emittiert wird. Es hat sich aber gezeigt, dass sich ein Reifenabrieb gänzlich vom Bremsabrieb unterscheidet, was beispielsweise die Partikelmorphologie, die Partikelgröße, die Partikelkonzentration oder die Partikelgrößenverteilung angeht.

Um die Entstehung und das Ausmaß der Feinstauberzeugung durch Reifenabrieb oder Bremsabrieb besser beurteilen zu können, ist es schon bekannt, den Reifenabrieb oder Bremsabrieb entweder während einer Fahrt mit einem Fahrzeug zu sammeln und anschließend eine bestimmte Charakteristik des Reifenabriebs, wie eine Partikelgrößenverteilung, Partikelmasse usw., zu messen, oder den Reifenabrieb oder Bremsabrieb auf speziellen Prüfständen zu erfassen. Das wird beispielsweise in Hesse D., et al., "Comparison of Methods for Sampling Particulate Emissions from Tires under Different Test Environments", Atmosphere 2022, 13, 1262 beschrieben. Die Erfassung des Reifenabriebs oder Bremsabriebs während der Fahrt ist aber nur schwer möglich, weil es immer eine Querkontamination mit Fremdpartikeln aus der Umgebung des Reifens kommt, beispielsweise mit Straßenabrieb, Umgebungsstaub usw. Die Fremdpartikel werden dem Messsystem mit dem Abrieb zugeführt und können im Messsystem nicht, oder nur sehr aufwendig, von Reifenabrieb oder Bremsabrieb getrennt und/oder unterschieden werden. Das verfälscht die Genauigkeit der Messung des Reifen- oder Bremsabriebs. Eine solche Messung ist daher unverlässlich.

Eine Erfassung des Reifenabriebs und/oder Bremsabriebs kann auch auf einem Prüfstand erfolgen. Dazu wird ein zu prüfende Reifen oder der Reifen gemeinsam mit einer Bremse in einem Prüflauf dynamischen Tests unterworfen. Bei einem Reifenabriebprüfstand beispielsweise rollt ein angetriebener Reifen auf einer angetriebenen, um eine Rollendrehachse drehbaren Prüfstandrolle ab. Der Reifen ist üblicherweise eingehaust, um die Abriebpartikel in der Einhausung zu sammeln und mittels einer Luftströmung über einen Abluftkanal aus der Einhausung abzuführen. Die mittels Luftströmung abgeführten Abriebpartikel werden dann einer Messung mittels eines Messgeräts, beispielsweise mit einem Partikelmessgerät, zugeführt.

Das Problem mit solchen Reifenabriebprüfständen ist, dass üblicherweise die Einhausung eine Rollenausnehmung aufweist, durch welche die Prüfstandrolle teilweise in einen Einhausungsinnenraum der Einhausung hineinragt, damit der zu prüfende Reifen auf der Prüfstandrolle während des Prüflaufs abrollen bzw. die Prüfstandrolle oder deren Rollenlauffläche an einer Reifenaufstandsfläche kontaktieren kann. Durch die Rollenausnehmung können einerseits Abriebpartikel z.B. durch einen Spalt zwischen der rotierenden Prüfstandrolle und der Einhausung und über die Rollenausnehmung fallen oder von der Luftströmung z.B. in den Bereich der Prüfstandrolle getrieben werden, anstatt von der Luftströmung über den Abluftkanal abgeführt werden. Diese Abriebpartikel gehen damit für die Auswertung verloren. Andererseits können über die Rollenausnehmung in der Einhausung, vor allem über den Spalt zwischen der rotierenden Prüfstandrolle und der Einhausung auch Fremdpartikel aus der Umgebung bzw. aus einer gegebenenfalls vorhandenen Rolleneinhausung in den Einhausungsinnenraum mit dem zu prüfenden Reifen und damit in die Messumgebung eingetragen werden. Sowohl der Verlust von Abriebpartikel als auch der Eintrag von Fremdpartikeln, welche nicht zur Messumgebung gehören (z.B., nicht vom zu prüfenden Reifen stammen), können damit die Messung des Partikelabriebs im Prüfstand verfälschen und damit die Messgenauigkeit erschweren.

### Darstellung der Erfindung

Es ist daher die Aufgabe der gegenständlichen Erfindung, eine gegenüber bestehenden Prüfstanden verbesserte Prüfstandanordnung anzugeben, bei welcher eine Verfälschung von Messungen durch Partikelverlust und/oder durch Partikeleintrag reduziert und die Genauigkeit von Partikelmessergebnissen verbessert wird.

Es ist daher eine Aufgabe der gegenständlichen Erfindung, eine Prüfstandanordnung anzugeben, der realitätsnähere Bedingungen für die Durchführung einer Reifen- oder Bremsabriebprüfung ermöglicht.

Diese Aufgabe wird durch eine Prüfanordnung gemäß dem unabhängigen Anspruch gelöst. Vorteilhafte Ausführungsformen der vorliegenden Erfindung sind in den abhängigen Ansprüchen beschrieben.

Erfindungsgemäß erfolgt die Lösung der Aufgabe durch eine Prüfanordnung der eingangs angegebener Art, bei welcher der Einhausungsinnenraum auf Seiten der Prüfstandrolle von einer die Rollenausnehmung verdeckenden Abdeckplatte mit einer normal zur Reifendrehachse und/oder normal zur Rollendrehachse verlaufende Längsachse zumindest teilweise begrenzt wird. Diese Abdeckplatte weist einen entlang der Längsachse verlaufenden Reifenaufnahmebereich mit einer Ausnehmung und an den Reifenaufnahmebereich anschließende, in Richtung der Längsachse der Abdeckplatte verlaufende und einander hinsichtlich des Reifenaufnahmebereichs gegenüberliegende Seitenbereiche auf. Der Reifenaufnahmebereich ist dabei gegenüber den Seitenbereichen vertieft ausgeführt und die Ausnehmung gibt zumindest denjenigen Bereich der Rollenlauffläche frei, auf dem der zu prüfende Reifen während der Durchführung eines Prüflaufs abrollt.

Der Hauptaspekt der erfindungsgemäßen Prüfstandanordnung besteht darin, Verluste von Abriebpartikeln sowie weitere Störeinflüsse (z.B. Fremdpartikeleintrag), die eine Partikelmessung verfälschen und eine Genauigkeit der Partikelmessergebnisse reduzieren, möglichst gering zu halten. Durch die Abdeckplatte, welche die Rollenausnehmung weitgehend abdeckt und nur im Bereich ihrer Ausnehmung freigibt, wird ein Spalt, in bzw. an welchem der zu prüfende Reifen die Prüfstandrolle kontaktiert, möglichst klein gehalten. Idealerweise ist die Abdeckplatte in Strömungsrichtung einer Luftströmung ausgerichtet, die während der Durchführung eines Prüflaufs über eine Zuführleitung in der Einhausung geleitet wird. Diese Luftströmung soll die während des Prüflaufs entstehenden Abriebpartikel erfassen und diese dann über eine Abluftleitung dem Messgerät zuführen. Darüber hinaus ist die Abdeckplatte vorzugsweise strömungsoptimiert ausgeformt. Das bedeutet, dass durch den entlang der Längsachse verlaufenden Reifenaufnahmebereich, welcher gegenüber den Seitenbereichen vertieft ausgeführt ist, die Luftströmung, welche über die Zuluftleitung zuströmt, auf jenen Bereich der Rollenlauffläche bzw. der Reifenlauffläche gelenkt wird, auf dem der zu prüfende Reifen während der Durchführung eines Prüflaufs abrollt. Sie kann dort die Abriebpartikel erfassen und wird durch den gegenüber den Seitenbereichen vertieft ausgeführten Reifenaufnahmebereich direkt in Richtung einer Mündung der Abluftleitung geleitet. Andererseits bedeutet die Strömungsoptimierung, dass insbesondere die Seitenbereiche so ausgeführt sind, dass dort die Luftströmung möglichst störungs- und verwirbelungsfrei gehalten wird. Damit werden idealerweise Partikelverluste reduziert bzw. verhindert. Damit werden idealerweise Partikelverluste reduziert bzw. verhindert. Es werden also auf einfache Weise Störeinflüsse verhindert bzw. reduziert und die Genauigkeit der Messergebnisse verbessert.

Es ist günstig, wenn die Seitenbereiche, welche den Reifenaufnahmebereich begrenzen, bezogen auf den Einhausungsinnenraum nach innen gewölbt ausgeführt sind. Mit anderen Worten sind die Seitenbereiche in Richtung des Inneren des Einhausungsinnenraum gewölbt ausgeführt. Dabei ist es von Vorteil, wenn eine Wölbung der Seitenbereiche an eine Krümmung der Rollenlauffläche der zumindest einen Prüfstandrolle angepasst ist, damit die Abdeckplatte für eine Drehbewegung der Prüfstandrolle während einer Durchführung eines Prüflaufs kein Hindernis darstellt, aber sich zwischen Prüfstandrolle und Abdeckplatte ergebende Spaltbereiche möglichst klein gehalten werden können.

Es ist weiterhin günstig, wenn zumindest eine Seitenbegrenzung der Ausnehmung, welche von einer der Ausnehmung zugewandten Begrenzungswand eines Seitenbereichs gebildet ist, bauchig und/oder bogenförmig ausgestaltet ist. Dazu weist die Ausnehmung in einem Verlauf entlang der Längsachse der Abdeckplatte eine unterschiedliche Breite auf, wobei eine größte Breite im Kontaktbereich zwischen zu prüfenden Reifen und Prüfstandrolle vorgesehen ist. Die bauchig bzw. bogenförmig ausgestaltete Seitenbegrenzung der Ausnehmung hat den Vorteil, dass ein zu prüfender Reifen während des Durchlaufs eines Prüflaufs z.B. mittels eines Reifenstellantriebs in eine andere Stellung gebracht werden kann, in der die Reifendrehachse und die Rollendrehachse nicht parallel ausgerichtet sind und/oder sich nicht in einer gemeinsamen Vertikalebene befinden, um einen gewissen Reifensturz und/oder Lenkeinschlag nachstellen zu können. In einer Variante der Erfindung kann zumindest eine Seitenbegrenzung oder beide Seitenbegrenzungen der gesamten Reifenausnehmung zumindest abschnittsweise auf die oben beschriebene Weise bauchig und/oder bogenförmig ausgestaltet sein.

In einer Ausführungsform der erfindungsgemäßen Prüfstandanordnung ist die Abdeckplatte an einer unteren Begrenzungswand der Einhausung, an welcher die Rollenausnehmung ausgebildet ist, lösbar oder unlösbar fixiert angebracht.

In einer weiteren Ausführungsform der erfindungsgemäßen Prüfstandanordnung ist die Abdeckplatte in der Prüfstandanordnung im Bereich der Rollenausnehmung beweglich gelagert ist. Idealerweise kann die Abdeckplatte eine Basisplatte aufweist, welche im Bereich der Rollenausnehmung drehbar gelagert oder lagerbar ist. Diese Basisplatte ist vorteilhafterweise zum Ausführen von Drehbewegungen kreisförmig ausgestaltet.

Weiterhin kann die Prüfstandanordnung einen Rollenstellantrieb aufweisen, über welche eine Verschwenkung der Prüfstandrolle zum Simulieren von Lenkbewegungen während der Durchführung eines Prüflaufs steuerbar ist. Idealerweise kann die Abdeckplatte, welche drehbar gelagert ist, während der Durchführung eines Prüflaufs mit der Prüfstandanordnung bei Betätigung des Rollenstellantriebs mitgesteuert werden. Damit kann die Abdeckplatte auf einfache Weise mit einer Schwenkbewegung der Prüfstandrolle mitbewegt werden und behindert damit die Simulation von Lenkbewegungen während des Prüflaufs nicht.

### Kurzbeschreibung der Figuren

Die gegenständliche Erfindung wird nachfolgend unter Bezugnahme auf die Figuren 1 bis 4b näher erläutert, die beispielhaft, schematisch und nicht einschränkend vorteilhafte Ausgestaltungen der Erfindung zeigen. Dabei zeigt
Fig. 1 eine perspektivische Gesamtansicht einer erfindungsgemäßen Prüfstandanordnung;
Fig. 2 eine schematische Schnittansicht der Prüfstandanordnung, insbesondere von Einhausung und Prüfstandrolle;
Fig. 3 eine perspektivische Detailansicht der erfindungsgemäßen Prüfstandanordnung, insbesondere von der Einhausung mit Abdeckplatte;
Fig. 4a eine perspektivische Detailansicht einer in der Prüfstandanordnung fixierbaren Abdeckplatte;
Fig. 4b eine perspektivische Detailansicht einer in der Prüfstandanordnung beweglich gelagerten Abdeckplatte.

### Ausführung der Erfindung

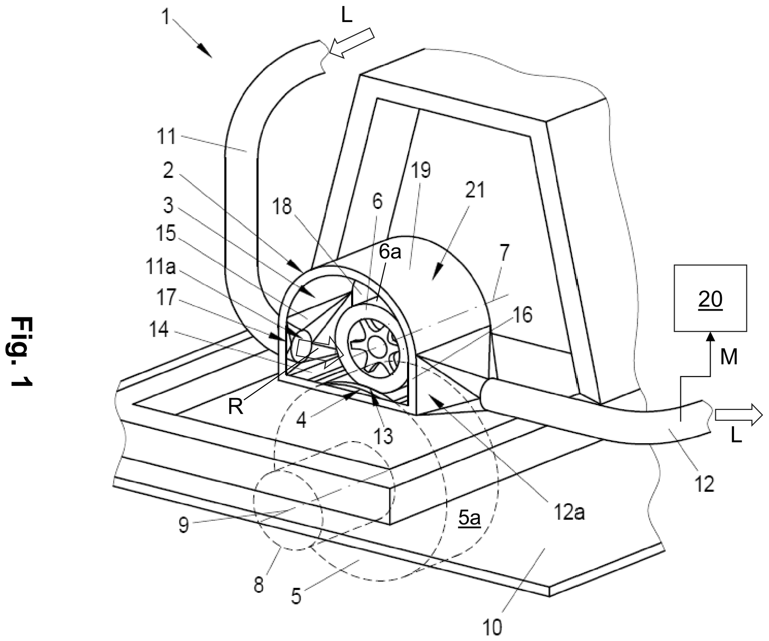

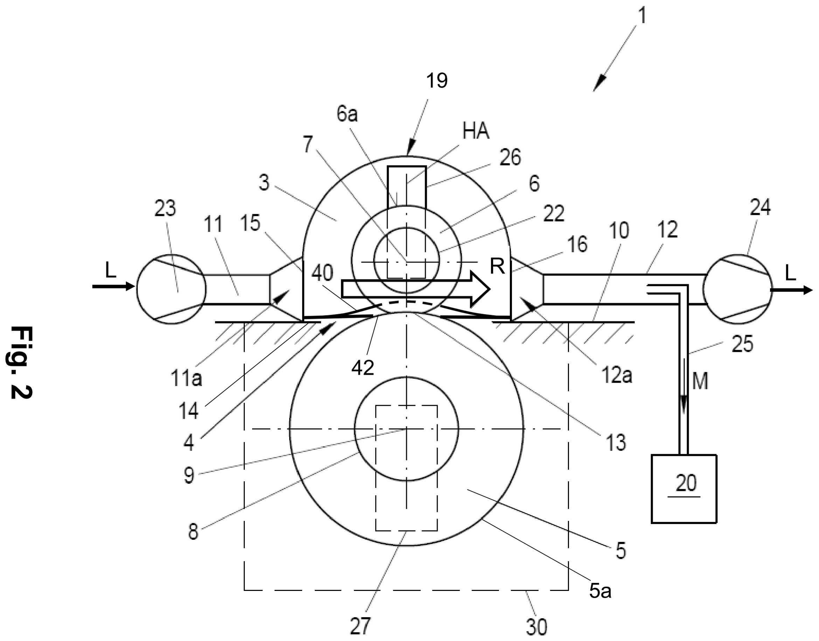

Fig.1 und Fig. 2 zeigen eine Ausgestaltung der erfindungsgemäßen Prüfstandanordnung 1 zur Ermittlung von Reifen- und/oder Bremsabrieb, wobei Fig.1 beispielhaft eine perspektivische Gesamtsicht der Prüfstandanordnung 1 und Fig. 2 beispielhaft eine schematische Schnittansicht der Prüfstandanordnung 1 zeigen.

Die Prüfstandanordnung 1 umfasst eine Einhausung 2, die einen Einhausungsinnenraum 3 begrenzt. "Begrenzt" bedeutet, dass die Einhausung 2 den Einhausungsinnenraum 3 zumindest teilweise, vorzugsweise bis auf eine später beschriebene Rollenausnehmung 4 vollständig umgibt. Die Einhausung 2 hat hierzu Begrenzungswände 14, 15, 16, 17, 18, 19, wobei jede Begrenzungswand 14, 15, 16, 17, 18, 19 den Einhausungsinnenraum 3 zumindest teilweise begrenzt, wie weiter unten noch näher ausgeführt wird.

An der Einhausung 2 ist eine Rollenausnehmung 4 vorgesehen, durch die eine Prüfstandrolle 5 zumindest teilweise in den Einhausungsinnenraum 3 hineinragt. Bei Durchführung eines Prüflaufs mit der Prüfstandanordnung 1 ist in der Einhausung 2 ein zu prüfender Reifen 6 drehbar gelagert angeordnet. Der Reifen 6 steht über eine Reifenaufstandsfläche 13 auf der Prüfstandrolle 5 bzw. auf einer Rollenlauffläche 5a der Prüfstandrolle 5 auf, kontaktiert die Prüfstandrolle 5 bzw. die Rollenlauffläche 5a also an der Reifenaufstandsfläche 13. Mit anderen Worten rollt ein zu prüfender Reifen 6 bei Durchführung eines Prüflaufs mit der Prüfstandanordnung 1 auf der Rollenlauffläche 5a der Prüfstandrolle 5 ab.

Selbstverständlich können in der Prüfstandanordnung 1 unterschiedliche Reifen 6, insbesondere mit unterschiedlichen Reifenbreiten oder Reifendurchmessern, angeordnet und geprüft werden. Bei unterschiedlichen Reifenbreiten oder unterschiedlichen Durchmessern verändert sich natürlich auch die Reifenaufstandsfläche 13.

Die Prüfstandrolle 5 ist beispielsweise, wie in der Ausgestaltung der Fig.1 dargestellt, zumindest teilweise unterhalb eines Prüfstandbodens 10 angeordnet und die Einhausung 2 befindet sich auf dem Prüfstandboden 10 bzw. oberhalb des Prüfstandbodens 10.

Es ist aber nicht notwendig, dass die Einhausung 2 in Richtung der Schwerkraft oberhalb von der Prüfstandrolle 5 angeordnet ist und/oder der Reifen 6 in Richtung der Schwerkraft oberhalb von der Prüfstandrolle 5, wie in Fig.1. In einer möglichen Ausgestaltung kann diese Anordnung auch um einen bestimmten Winkel, vorzugsweise um 90° verschwenkt sein. In einer solchen Anordnung wären die Einhausung 2 und/oder der Reifen 6 und die Prüfstandrolle 5 im Wesentlichen horizontal nebeneinander angeordnet.

Der Reifen 6 ist in der Einhausung 2 bzw. im Einhausungsinnenraum 3 um eine Reifendrehachse 7 drehbar gelagert angeordnet. Dazu kann in der Einhausung eine Reifenhalterung vorgesehen sein, an welcher der Reifen 6 drehbar gelagert angeordnet werden kann. Der Reifen 6 kann beispielsweise an einer Reifenfelge angeordnet sein, welche an einer drehbar gelagerten Radnabe als Reifenhalterung angeordnet ist. Für eine Durchführung eines Prüflaufs mit der Prüfanordnung kann die Reifenhalterung, wie die Radnabe, und damit der zu prüfende Reifen 6 durch einen Reifenantrieb 22 (siehe Fig. 2), wie z.B., einen Elektromotor oder einen Elektromotor mit Getriebe, angetrieben werden, sodass der Reifen 6 um die Reifendrehachse 7 rotiert. Die Drehachse der drehbar gelagerten Reifenhalterung bildet damit (mit oder ohne in der Einhausung 2 angeordneten Reifen 5) die Reifendrehachse 7 aus.

Ebenso kann die Prüfstandrolle 5 bei Durchführung eines Prüflaufs mit der Prüfstandanordnung 1 durch einen Rollenantrieb 8, wie einen Elektromotor oder einen Elektromotor mit Getriebe, angetrieben sein, sodass die Prüfstandrolle 5 um eine Rollendrehachse 9 rotiert.

Für die Durchführung eines Prüflaufs reicht es aber grundsätzlich aus, wenn entweder der Reifen 6 oder die Prüfstandrolle 5 zum Rotieren angetrieben ist. Sind die Prüfstandrolle 5 und der Reifen 6 zum Rotieren angetrieben, dann können auch Längskräfte und Längsmomente, Bremsmanöver und Beschleunigungsmanöver simuliert werden, oder auch Querkräfte erzeugt werden. Hierzu können der Reifen 6 und die Prüfstandrolle 5 auch mit unterschiedlichen Drehzahlen rotieren.

Die Prüfstandanordnung 1 kann auch eine Prüfstandsteuereinheit (in Fig. 1 bzw. Fig. 2 aus Übersichtlichkeitsgründen nicht dargestellt) aufweisen, die Sollwerte für den Reifenantrieb 22 und/oder Sollwerte für den Rollenantrieb 8 erzeugt, wie z.B. eine Solldrehzahl, ein Solldrehmoment des Reifens 6 und/oder der Prüfstandrolle 5, etc., und damit den Reifenantrieb 22 und/oder den Rollenantrieb 8 ansteuert. Über die Sollwerte wird mit der Prüfstandanordnung 1 ein bestimmter Prüflauf realisiert. Im Betrieb der Prüfstandanordnung 1 wird eine zeitliche Abfolge, in der Regel in vorgegebenen Regelungszeitschritten, üblicherweise im Millisekunden- oder Mikrosekundenbereich, von Sollwerten erzeugt, mit der der Reifenantrieb 22 und/oder den Rollenantrieb 8 angesteuert wird. Über die Sollwerte, konkret den zeitlichen Verlauf zumindest eines dieser Sollwerte, wird mit der Prüfstandanordnung 1 ein bestimmter Prüflauf realisiert, indem der Sollwert vom Reifenantrieb 22 und/oder vom Rollenantrieb 8 eingestellt wird. Die Prüfstandsteuereinheit ist üblicherweise eine mikroprozessorbasierte Hardware, wie ein Mikrocontroller, ein Computer usw., auf der Steuersoftware abläuft.

Wie beispielhaft in Fig. 1 und Fig. 2 dargestellt, sind die Reifendrehachse 7 und die Rollendrehachse 9 in einer ersten Stellung des Reifens 6 in der Einhausung 2 im Wesentlichen parallel zueinander. Diese erste Stellung entspricht einer Geradeausstellung, in der der Reifen 6 ohne Reifensturz an einem Fahrzeug ohne Lenkeinschlag ausgerichtet wäre. In der Geradeausstellung spannen die Reifendrehachse 7 und die Rollendrehachse 9, die parallel zueinander sind, eine normal auf die Reifenaufstandsfläche 13 verlaufende Vertikalebene auf.

In einer möglichen Ausgestaltung der Prüfstandanordnung 1 ist ein Reifenstellantrieb 26 (Fig.2) vorgesehen, mit dem der Reifen 6 in eine andere Stellung gebracht werden kann, in der die Reifendrehachse 7 und die Rollendrehachse 9 nicht parallel ausgerichtet sind und/oder sich nicht in einer gemeinsamen Vertikalebene befinden. Damit könnte ein gewisser Reifensturz eingestellt werden und/oder ein gewisser Lenkeinschlag des Reifens 6 nachgestellt werden. Ebenso ist es möglich, dass mittels des Reifenstellantrieb 26 eine Aufstandskraft, mit der der Reifen 6 auf der Prüfstandrolle 5 aufsteht, eingestellt wird. Auch eine Einstellung von Querkräften oder Längskräfte ist damit möglich. Der Reifenstellantrieb 26 ist vorzugsweise außerhalb der Einhausung 2 angeordnet und ragt durch eine Begrenzungswand der Einhausung 2 in die Einhausung 2 hinein.

In einer weiteren Variante kann der Reifen 6 an einer Radaufhängung in der Einhausung 2 angeordnet sein. Damit könnte ein Lenkeinschlag auch durch einen auf einen Spurhebel der Radaufhängung wirkenden Reifenstellantrieb 26 eingestellt werden, was auch eine Veränderung des Reifensturzes durch die Radaufhängung bewirken kann.

Anstatt den Reifen 6 in der Einhausung 2 zu verstellen, ist es natürlich ebenso möglich, mittels eines Rollenstellantriebs 27 (in Fig.2 gestrichelt angedeutet) die Prüfstandrolle 5 bezogen auf den Reifen 6 zu verstellen, um einen Lenkeinschlag und/oder einen Reifensturz und/oder eine Aufstandskraft einzustellen.

Somit ist eine Prüfstandanordnung 1 mit lenkbarem Reifen 6 und fixierter Prüfstandrolle 5 oder eine Prüfstandanordnung 1 mit fixiertem Reifen 6 (nicht lenkbar) und lenkbarer Prüfstandrolle 5 oder eine Kombination aus beidem möglich.

Für die Einstellung eines Lenkeinschlags wird beispielsweise der Reifen 6 mit dem Reifenstellantrieb 26 und/oder die Prüfstandrolle 5 mit dem Rollenstellantrieb 27 um eine Hochachse HA (Fig.2) verdreht. Ebenso könnte eine Aufstandskraft in Richtung der Hochachse HA eingestellt oder verstellt werden.

Ein Lenkeinschlag oder ein Reifensturz ergeben sich natürlich erst bei Durchführung eines Prüflaufs mit der Prüfstandanordnung 1. In einer Ruhestellung der Prüfstandanordnung 1, in der kein Reifen 6 in der Einhausung 2 angeordnet ist, sind die Reifendrehachse 7 (die durch die Drehachse der Reifenhalterung festgelegt ist) und die Rollendrehachse 9 vorzugsweise parallel zueinander. In der Ruhestellung wird beispielsweise ein Reifen 6 in der Einhausung 2 montiert oder abgenommen.

Ebenso ist es möglich, bei Durchführung eines Prüflaufs mit der Prüfstandanordnung 1 mehr als einen Reifen 6 in der Einhausung 2 anzuordnen und auf der Prüfstandrolle 5 abrollen zu lassen. Ebenso ist es denkbar, auf einer Prüfstandrolle 1 mehrere Einhausungen 2, in denen jeweils ein Reifen 6 angeordnet und geprüft werden kann, vorzusehen.

Bei Durchführung eines Prüflaufs mit der Prüfstandanordnung 1 rollt somit der Reifen 6 an der Reifenaufstandsfläche 13 auf der Prüfstandrolle 5 bzw. auf der Rollenlauffläche 5a ab. Damit kann Reifenabrieb erzeugt werden, wie er bei normaler Verwendung eines Reifens 6 im Straßenverkehr entsteht. Bei Durchführung eines Prüflaufs mit der Prüfstandanordnung 1 wird insbesondere auch eine vorgegebene Fahrtstrecke simuliert. Hierzu kann bei Durchführung eines Prüflaufs mit der Prüfstandanordnung 1 auch die Stellung der Reifendrehachse 7 bezogen auf die Rollendrehachse 9 verändert werden, womit sowohl ein Lenkeinschlag auch ein Reifensturz eingestellt werden kann. Ebenso kann bei Durchführung eines Prüflaufs durch Einstellen der Reifendrehzahl und/oder der Rollendrehzahl auch eine simulierte Fahrzeuggeschwindigkeit verändert werden.

Die Prüfstandanordnung 1 kann aber auch verwendet werden, um Bremsabrieb zu erfassen. Hierzu könnte der Reifen 6 gemeinsam mit einer Bremse (nicht dargestellt), wie einer Schwimmsattelbremse oder Trommelbremse, in der Einhausung 2 angeordnet werden. Bei Durchführung eines Prüflaufs mit der Prüfstandanordnung 1 kann über die Bremse der Reifen 6 gebremst werden, sodass Bremsabrieb entsteht.

In einer anderen möglichen Ausgestaltung ist die Bremse für den Reifen 6 außerhalb der Einhausung 2 angeordnet. Damit kann der Reifen 6 bei Durchführung eines Prüflaufs mit der Prüfstandanordnung 1 aktiv mit der Bremse gebremst werden. Der entstehende Bremsabrieb entsteht dabei außerhalb der Einhausung 2 und vermischt sich damit nicht mit einem in der Einhausung 2 erzeugten Reifenabrieb. Das kann eine bessere Prüfung des Reifenabriebs ermöglichen.

An der Einhausung 2 sind eine Zuluftleitung 11 zum Zuführen von Luft L in den Einhausungsinnenraum 3 und eine Abluftleitung 12 zum Abführen von Luft L aus dem Einhausungsinnenraum 3 angeordnet. Die Zuluftleitung 11 und die Abluftleitung 12 münden dazu an einem jeweiligen Mündungsbereich 11a, 12a der Einhausung 2 in den Einhausungsinnenraum 3. Bei Durchführung eines Prüflaufs mit der Prüfstandanordnung 1 wird Luft L als Luftstrom über die Zuluftleitung 11 zugeführt und über die Abluftleitung 12 wieder abgeführt. Hierfür ist zumindest in der Zuluftleitung 11 oder Abluftleitung 12 ein Gebläse 23, 24, vorzugsweise in beiden jeweils ein Gebläse 23, 24 (in Fig. 2 dargestellt) vorgesehen, um den Luftstrom zu erzeugen.

Durch das Zuführen von Luft L in den Einhausungsinnenraum 3 und das gleichzeitige Abführen von Luft L aus dem Einhausungsinnenraum 3 entsteht auch im Einhausungsinnenraum 3 der Einhausung 2 eine Luftströmung R mit einer Strömungsrichtung (in Fig.1 und 2 mit einem Pfeil angedeutet) vom Mündungsbereich 11a der Zuluftleitung 11 zum Mündungsbereich 12a der Abluftleitung 12. Mit dieser Luftströmung R werden während der Durchführung eines Prüfungslaufs Abriebpartikel (z.B., Reifen- und/oder Bremspartikel) in der Einhausung 2 mitgerissen und aus der Einhausung 2 abgeführt. Durch Steuern der in der Zuluftleitung 11 zugeführten Luft L und/oder der in der Abluftleitung 12 abgeführten Luft L kann auch die Luftströmung R bei Durchführung eines Prüflaufs mit der Prüfstandanordnung 1 kontrolliert werden, sodass möglichst viele der Abriebpartikel mit der Luftströmung R abgeführt werden. Dabei soll die Strömungsgeschwindigkeit dieser Luftströmung R nicht zu gering sein, um zu verhindern, dass schwere Abriebpartikel nicht mitgerissen werden und sich in der Einhausung 2 durch die Schwerkraft absetzen und am Boden ablagern. Die Strömungsgeschwindigkeit der Luftströmung R soll aber auch nicht zu hoch sein, damit Partikelverluste durch Impaktion vermieden werden. Unter Impaktion wird der Effekt verstanden, dass Abriebpartikel der Luftströmung R und/oder den Richtungsänderungen der Luftströmung R nicht folgen können, sondern sich aufgrund ihrer Trägheit und gegebenenfalls der einwirkenden Zentrifugalkräfte, gemäß ihrer Bewegung, beispielsweise in Umfangsrichtung oder Tangentialrichtung des Reifens 6, fortbewegen. Die Luftströmung R kann für jede Anwendung geeignet festgelegt werden, beispielsweise mittels entsprechender Versuche.

Die der Einhausung 2 zugeführte Luft L kann auch konditioniert sein, was eine Filterung, Temperierung, Druckregelung, Feuchteregelung usw. umfassen kann. Insbesondere ist die Zuluft partikelfrei, was bedeutet, dass keine oder nur eine vernachlässigbare Anzahl Partikel in einem vorgegebenen Partikelgrößenbereich, der für die Messung interessant ist, enthalten ist.

Die Abluftleitung 12 ist bei Durchführung eines Prüflaufs mit der Prüfstandanordnung 1 mit zumindest einem Messgerät 20 verbunden, das insbesondere auch für die Messung von Abriebpartikeln geeignet ist. Das Messgerät 20 erhält zumindest einen Messluftstrom M der zumindest ein Teilstrom des aus der Einhausung 2 über die Abluftleitung 12 abgeführten Luftstroms L ist. Hierzu kann der Messluftstrom M aus der Abluftleitung 12 abgezweigt werden, wobei es für die Abriebmessung vorteilhaft sein kann, wenn die Abzweigung isokinetisch erfolgt, d.h., die Strömungsgeschwindigkeit des Messluftstroms M im Wesentlichen der Strömungsgeschwindigkeit der abgeführten Luft L in der Abluftleitung 12 entspricht. In Fig.2 ist ferner eine von der Abluftleitung 12 abzweigende Messleitung 25 dargestellt, die mit dem Messgerät 20 verbunden ist und über welche der Messluftstrom M dem Messgerät 20 zugeführt wird.

Grundsätzlich können aus der Abluftleitung 12 auch mehrere Messluftströme M abgezweigt werden und unterschiedlichen Messgeräten 20 zugeführt werden, um beispielsweise unterschiedliche Eigenschaften des Abriebs zu messen, wie z.B., eine Abriebpartikelgrößenverteilung, eine Abriebpartikelmasse, eine Abriebpartikelanzahl usw. Derartige Messgeräte 20 sind hinlänglich bekannt. Häufig eingesetzte Messgeräte 20 sind ein Kondensationspartikelzähler oder ein Diffusionsladungssensor, die hinlänglich bekannt sind. Zusätzlich können weitere Messgeräte vorgesehen sein, die nicht den Abrieb, sondern andere Parameter des Abluftstroms messen.

Gegebenenfalls kann der aus der Einhausung 2 abgeführten Luftstrom oder der Messluftstrom M vor dem Messgerät 20 in einer Verdünnungseinheit (in den Fign. 1 und 2 nicht dargestellt) in einem vorgegebenen Verhältnis verdünnt werden, um die Abriebpartikelkonzentration für die Messung zu reduzieren. Die Verdünnung erfolgt beispielsweise mit partikelfreier Luft. Partikelfrei bedeutet dabei, dass keine oder nur eine vernachlässigbare Anzahl Partikel in einem vorgegebenen Partikelgrößenbereich, der für die Messung interessant ist, enthalten ist.

Wie bereits erwähnt, weist die Einhausung 2 Begrenzungswände 14, 15, 16, 17, 18, 19 auf. In der in Fig. 1 beispielhaft dargestellten Ausgestaltung der Prüfstandanordnung 1 umfasst die Einhausung 2 zwei Seitenwände 15, 16, eine Vorderwand 17, welche in Fig. 1 wegelassen wurde, um das Innere der Einhausung 2 darzustellen, eine Rückwand 18 sowie eine obere Begrenzungswand 19 und eine untere Begrenzungswand 14. Die untere Begrenzungswand 14 ist dabei auf der der Prüfstandrolle 5 zugewandten Seite des Einhausungsinnenraums 3 angeordnet. Begriffe wie "vorder", "rück", "oben" oder "unten" dienen nur der Unterscheidung der einzelnen Begrenzungswände 14, 15, 16, 17, 18, 19, sind aber hinsichtlich einer bestimmten Ausrichtung oder Anordnung der jeweiligen Begrenzungswände 14, 15, 16, 17, 18, 19 nicht einschränkend zu verstehen.

Wie in Fig. 1 beispielhaft dargestellt, sind die beiden Seitenwände 15, 16 im Wesentlichen parallel zueinander und parallel zur Reifendrehachse 7 ausgerichtet, wenn sich der zu prüfende Reifen 6 in einer Geradeausstellung (ohne Lenkeinschlag) befindet, und bezogen auf die Reifendrehachse 7 einander gegenüberliegend angeordnet. Die Vorderwand 17 und die Rückwand 18 sind bei Geradeausstellung des Reifens 6 (ohne Lenkeinschlag) im Wesentlichen normal zur Reifendrehachse 7 ausgerichtet. Die Seitenwände 15, 16 gehen in die Vorwand 17 und die Rückwand 18 über, um den Einhausungsinnenraum 3 auszubilden. Diese Wände können grundsätzlich beliebig in Form, Ausrichtung, Geometrie, usw. ausgeführt sein.

Die Zuluftleitung 11 und die Abluftleitung 12 münden vorzugsweise im Bereich der Seitenwände 15, 16 in die Einhausung 2, wobei an jeder der beiden Seitenwände 15, 16 jeweils eine dieser Leitungen 11, 12 mündet. Die Zuluftleitung 11 und die Abluftleitung 12 sind demnach bezogen auf die Reifendrehachse 7 einander gegenüberliegend angeordnet. Die Mündungsbereiche 11a, 12a der Zuluftleitung 11 und Abluftleitung 12 können beispielsweise fluchtend zueinander ausgerichtet sein.

Die Vorderwand 17, oder auch eine andere der Begrenzungswände der Einhausung 2, kann von der Einhausung 2 abnehmbar ausgestaltet sein, um den Einhausungsinnenraum 3 von außen zugänglich zu machen, beispielsweise um einen Reifen 6 in der Einhausung 2 anordnen zu können.

Die obere Begrenzungswand 19 ist an der Einhausung 2 gegenüber der Rollenausnehmung 4 angeordnet und ist bei der in Fig. 1 bzw. Fig. 2 dargestellten Ausführungsform der Prüfstandanordnung zumindest teilweise in einem Bogenabschnitt 21 bogenförmig verlaufend ausgeführt. Mit anderen Worten ist die obere Begrenzungswand 19 der Einhausung in einer Querschnittsebene (entspricht in der Darstellung der Fig. 2 der Zeichnungsblattebene) normal auf die Rollendrehachse 9 bzw. in einer Geradeausstellung des Reifens 6 (ohne Lenkeinschlag) auch normal auf die Reifendrehachse 7 zumindest teilweise bogenförmig verlaufend, idealerweise gänzlich bogenförmig verlaufend, ausgeführt. Der bogenförmig verlaufend geformte Bogenabschnitt 21 der oberen Begrenzungswand 19 ist bezogen auf den Einhausungsinnenraum 3 nach außen gewölbt. Die bogenförmig verlaufende obere Begrenzungswand 19 geht in die beiden Seitenwände 15, 16 über, wobei der Übergang der bogenförmig verlaufenden oberen Begrenzungswand 19 zu den Seitenwänden 15, 16 näher an der Rollenausnehmung 4 und der Reifenaufstandsfläche 13 angeordnet ist als ein der Rollenausnehmung 4 gegenüberliegender Scheitelbereich der oberen Begrenzungswand 19. Dabei können die Übergänge, wie z.B. in Fig. 2 gezeigt, in einem gleichen Abstand zur Reifenaufstandsfläche 13 angeordnet sein.

Bei Durchführung eines Prüflaufs ist der zu prüfende Reifen 6 zwischen dem Bogenabschnitt 21 der oberen Begrenzungswand 19 und der in die Einhausung 2 durch die Rollenausnehmung 4 hineinragenden Prüfstandrolle 5 angeordnet und kontaktiert dabei, wie bereits beschrieben, die Rollenlauffläche 5a über die Reifenaufstandsfläche 13. Zwischen dem Reifen 6 und der Einhausung 2, insbesondere zwischen dem Reifen 6 und dem Bogenabschnitt 21 der oberen Begrenzungswand 19 und den Seitenwänden 15, 16, ist ein Abstand vorgesehen, sodass der Reifen 6 die Einhausung 2 nicht berührt. Das ist zur Verdeutlichung auch in Fig.2 dargestellt. Es ist damit in der Einhausung 2 zwischen der obere Begrenzungswand 19 und der Rollenausnehmung 4 ein Reifenraum zur Aufnahme des Reifens 6 ausgebildet, wobei der Reifenraum ein Teil des Einhausungsinnenraums 3 ist. Durch die bogenförmig verlaufende, nach außen gewölbte obere Begrenzungswand 19 wird in der Einhausung 2 ein Radkasten eines Fahrzeugs nachgebildet. Die Einhausung 2, insbesondere die obere Begrenzungswand 19 kann allerdings auch eine von einer Bogenform abweichende Form oder Geometrie aufweisen, wie z.B. eine polygonzugartige Gestaltung dieses Bogenabschnitts 21 oder ähnliches. Allerdings können durch Nachbilden des Radkastens durch die Einhausung 2 mit der Prüfstandanordnung 1 realitätsnähere Prüfungen des Reifen- und/oder Bremsabriebs durchgeführt werden, weil die Strömungsverhältnisse in der Einhausung 2 Strömungsverhältnisse in einem realen Radkasten angenähert werden. "Realitätsnah" bedeutet hierbei natürlich, dass der Abrieb so ähnlich wie möglich mit jenem Reifenabrieb und/oder Bremsabrieb übereinstimmt, wie er bei Verwendung des Reifens 6 und/oder der Bremse an einem Fahrzeug und bei Bewegen des Fahrzeugs entlang einer Fahrtstrecke im normalen Straßenverkehr auftreten würde.

Weiterhin kann die Einhausung 2 eine untere Begrenzungswand 14 aufweisen, an bzw. in der die Rollenausnehmung 4 ausgebildet ist. Die untere Begrenzungswand 14 liegt hinsichtlich der Reifendrehachse 7 der oberen Begrenzungswand 19 gegenüber. Die untere Begrenzungswand 14 kann als eigenständige Begrenzungswand der Einhausung ausgebildet sein oder vom Prüfstandboden 10, wie in Fig. 2 dargestellt, gebildet werden, an bzw. in welchem dann die Rollenausnehmung 4 ausgebildet ist. Die unterer Begrenzungswand 14 bzw. der Prüfstandboden 10 trennen den Einhausungsinnenraum 3 der Einhausung 2 von einer Umgebung der Prüfstandrolle 5 oder einem Innenraum einer gegebenenfalls vorhandenen Rolleneinhausung 30. In Fig.2 ist beispielsweise gestrichelt eine derartige Rolleneinhausung 30 angedeutet, welche die Prüfstandrolle 5 einhaust. Die Rolleneinhausung 30 schließt an die Einhausung 2 an bzw. sind Rolleneinhausung 30 und Einhausung 2 durch die untere Begrenzungswand 14 voreinander getrennt. Die Rolleneinhausung 30 hat insbesondere den Effekt, einen Eintrag von Fremdpartikel aus der Umgebung der Prüfstandanordnung 1 in den Abriebpartikel enthaltenden Einhausungsinnenraum 3 zu reduzieren oder zu verhindern.

Das Ziel der Prüfstandanordnung 1 ist, den Abrieb, insbesondere den Reifenabrieb und/oder Bremsabrieb so realitätsnah wie möglich zu erzeugen. Der während eines Prüflaufs erzeugte Abrieb soll in der Prüfanordnung 1 auch möglichst ohne Verluste von Abriebpartikel und andere Störeinflüsse, wie Fremdpartikeleintrag, insbesondere über die Rollenausnehmung 4 bzw. einen Spalt zwischen der Prüfstandrolle 5 und der unteren Begrenzungswand 14 der Einhausung 2, erfasst werden, um diesen auswerten zu können.

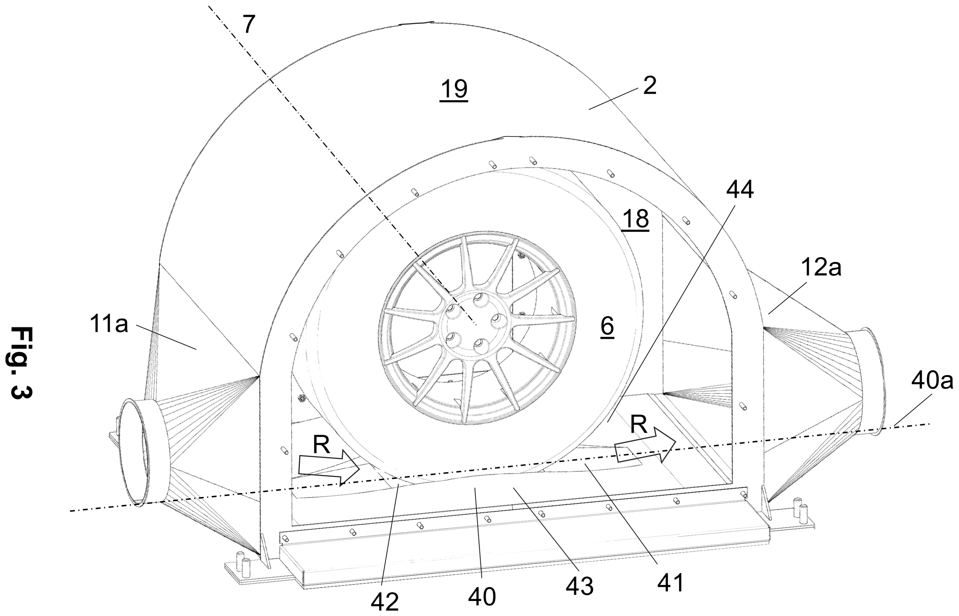

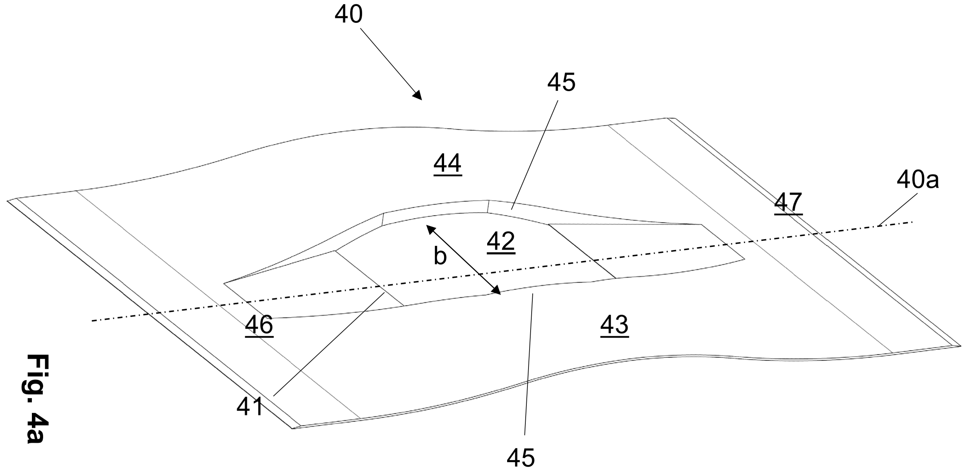

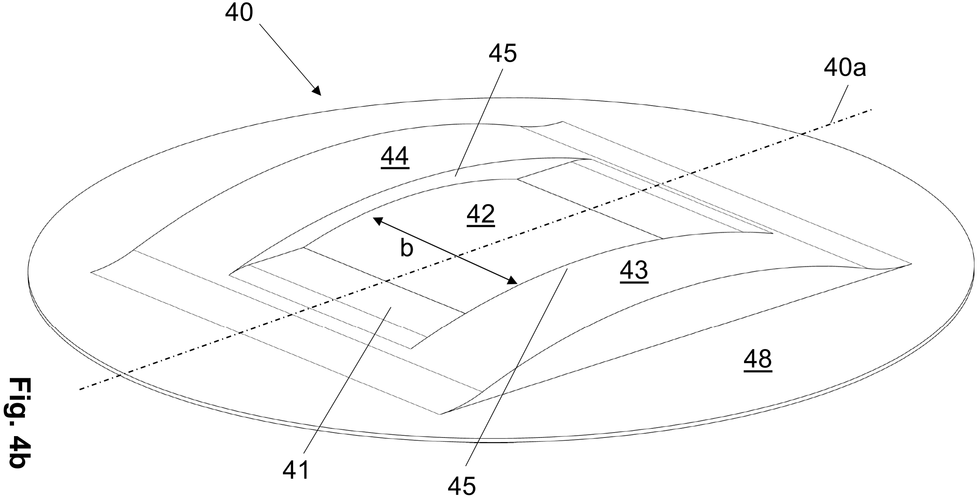

Um eine Verfälschung von Abriebmessungen durch Partikelverlust und/oder Eintrag von Fremdpartikeln in den Einhausungsinnenraum 3 der Prüfstandanordnung 1 zu reduzieren und im besten Fall zu verhindern und damit die Genauigkeit der Messergebnisse zu verbessern, weist die Prüfstandanordnung 1 im Einhausungsinnenraum 3 eine strömungsoptimiert ausgeformte Abdeckplatte 40 auf. Die strömungsoptimiert ausgeformte Abdeckplatte 40 ist im Bereich der Rollenausnehmung 4 im Wesentlichen parallel zur Reifendrehachse 7 (in einer Geradeausstellung des Reifens 6 bzw. ohne Lenkeinschlag) bzw. auch parallel zur Rollenachse 9 der Prüfstandrolle 5 angeordnet und deckt die Rollenausnehmung 4 weitgehend ab. Eine Längsachse 40a (siehe Fign. 3, 4a und 4b) der Abdeckplatte 40 verläuft normal zur Reifendrehachse 7 (in einer Geradeausstellung des Reifens 6 bzw. ohne Lenkeinschlag) und/oder normal zur Rollendrehachse 9. Im Ausführungsbeispiel gemäß Fig. 3 und in dem in Fig. 3 dargestellten Zustand der Prüfstandanordnung 1 ist die Längsachse 40a normal sowohl zur Reifen- 7 als auch zur Rollendrehachse 9 orientiert.

Die Abdeckplatte 40 ist beispielsweise an der unteren Begrenzungswand 14 bzw. am Prüfstandboden 10 (wie in Fig. 2 dargestellt) über der Rollenausnehmung 4 angebracht und erstreckt sich im Wesentlichen vom Mündungsbereich 11a der Zuluftleitung 11 bis zum Mündungsbereich 12a der Abluftleitung 12. Mit anderen Worten verdeckt die Abdeckplatte 40 die Rollenausnehmung 4 zumindest teilweise, vorzugsweise vollständig. Weiterhin weist die Abdeckplatte 40 eine Ausnehmung 42 auf, durch welche die Prüfstandrolle 5 in den Einhausungsinnenraum 3 hineinragt und welche zumindest die Reifenaufstandsfläche 13 freigibt, damit der Reifen 6 bei Durchführung eines Prüflaufs auf der Rollenlauffläche 5a der Prüfstandrolle 5 abrollen und die Prüfstandrolle 5 dabei an der Reifenaufstandsfläche 13 kontaktieren kann. Mit anderen Worten ist die Ausnehmung 42 so ausgeführt, dass sie zumindest denjenigen Bereich der Rollenlauffläche 5a freigibt, auf dem der zu prüfende Reifen 6 während der Durchführung eines Prüflaufs abrollt. Konkrete Ausführungsformen der Abdeckplatte 40 werden in der Folge anhand von Fig. 3 sowie den Fign. 4a und 4b näher erörtert.

Fig. 3 zeigt beispielhaft eine perspektivische Detailansicht der Einhausung 2 der Prüfstandanordnung 1, in welcher ein zu prüfender Reifen 6 am Reifenantrieb 22 (in Fig.3 nicht sichtbar) um die Reifendrehachse 7 drehbar angeordnet ist. Die Einhausung 2 weist, wie bereits oben näher ausgeführt, Begrenzungswände umfassend die Seitenwände 15, 16, die Vorderwand 17, die Rückwand 18, die obere Begrenzungswand 19 sowie die untere Begrenzungswand 14 auf. Um das Innere der Einhausung 2 wieder darzustellen, ist die Vorderwand 17 der Einhausung 2 wie in Fig. 1 auch in Fig. 3 weggelassen.

Die untere Begrenzungswand 14 (in Fig. 3 nicht sichtbar) liegt hinsichtlich der Reifendrehachse 7 der oberen Begrenzungswand 19 gegenüber und kann (wie bereits ausgeführt) als eigenständige Begrenzungswand der Einhausung 2 ausgebildet sein oder vom Prüfstandboden 10, wie in Fig. 2 dargestellt, gebildet werden. An der unteren Begrenzungswand 14 ist die Rollenausnehmung 4 ausgebildet, welche - wie aus Fig. 3 ersichtlich - von der Abdeckplatte 40 abgedeckt ist.

Die Abdeckplatte 40 ist strömungsoptimiert ausgeformt ausgestaltet. D.h., die Abdeckplatte 40 ist derart gestaltet, dass während der Durchführung eines Prüflaufs mit der Prüfstandanordnung einerseits Abriebpartikel von der Luftströmung R in der Einhausung 2 sicher erfasst und mit der Luftströmung R über den Mündungsbereich 12a der Abluftleitung 12 und die Abluftleitung 12 abgeleitet werden. Anderseits soll die strömungsoptimierte Ausformung der Abdeckplatte 40 dafür sorgen, dass Fremdpartikel z.B. aus der Umgebung und/oder dem Bereich der Prüfstandrolle 5 während der Durchführung eines Prüflaufs nicht in den Einhausungsinnenraum 3 gelangen, sondern z.B. aufgrund der Rollenbewegung gegen die Abdeckplatte 40 geschleudert werden.

Die Abdeckplatte 40 weist dazu einen entlang der Längsachse 40a der Abdeckplatte 40 verlaufenden Reifenaufnahmebereich 41 auf, welcher von zwei Seitenbereichen 43, 44 begrenzt wird. Mit anderen Worten schließen an den Reifenaufnahmebereich 41 zwei Seitenbereiche 43, 44 an, die ebenfalls in Richtung der Längsachse 40a der Abdeckplatte 40 verlaufen und einander hinsichtlich des Reifenaufnahmebereichs 41 gegenüberliegen. Der Reifenaufnahmebereich 41 ist gegenüber den Seitenbereichen 43, 44 vertieft ausgeführt. Der Reifenaufnahmebereich 41 bildet quasi eine Rinne innerhalb der Abdeckplatte 40. Bei Durchführung eines Prüflaufs ist der zu prüfende Reifen 6 in dem Reifenaufnahmebereich 41 positioniert bzw. anordenbar. Weiterhin ist die Abdeckplatte 40 so in der Einhausung 2 bzw. im Bereich der Rollenausnehmung 4 angeordnet, dass der Reifenaufnahmebereich 41 im Wesentlichen in Strömungsrichtung der Luftströmung R in der Einhausung ausgerichtet ist. D.h., der Reifenaufnahmebereich 41 verläuft im Wesentlichen parallel zur Vorderwand 17 und Rückwand 18 der Einhausung 2 - bei einer drehbar gelagerten Abdeckplatte 40 (wie z.B. in Fig. 4b dargestellt) zumindest in der Ruhestellung der Prüfstandanordnung 1. Für die Durchführung eines Prüflaufs ist in dem Reifenaufnahmebereich 41 der zu prüfende Reifen 6 angeordnet. Dazu weist der Reifenaufnahmebereich 41 zumindest eine Breite b auf, welche einer Breite der Ausnehmung 42 entspricht, um einen Spalt möglichst klein zu halten. Allerdings kann der Reifenaufnahmebereich 41 in Strömungsrichtung der Luftströmung R zulaufen bzw. schmäler werden, um die Luftströmung R besser auf den zu prüfenden Reifen 6, insbesondere einen Kontaktbereich zwischen zu prüfenden Reifen 6 und der Prüfstandrolle 5 zu kanalisieren. Damit der Reifen 6 die Prüfstandrolle 5 an der Reifenaufstandsfläche 13 kontaktiert, weist die Abdeckplatte 40 im Bereich des Reifenaufnahmebereichs 41 die Ausnehmung 42 auf. Die Ausnehmung 42 ermöglicht es, dass die Prüfstandrolle 5 weiterhin in den Einhausungsinnenraum 3 hineinragt. Die Ausnehmung 42 gibt zumindest denjenigen Bereich der Rollenlauffläche 5a frei, auf dem der zu prüfende Reifen 6 während der Durchführung eines Prüflaufs abrollt.

Der Reifenaufnahmebereich 41 mit der Ausnehmung 42 wird von den Seitenbereichen 43, 44 begrenzt, welche so groß wie möglich ausgeführt sind. D.h., die Abdeckplatte 40 kann z.B. so ausgestaltet sein, dass sie sich von der einen Seitenwand 15 bis zur anderen Seitenwand 16 bzw. vom Mündungsbereich 11a der Zuluftleitung 11 bis zum Mündungsbereich 12a der Abluftleitung 12 in den Seitenwänden 15, 16 und von der Vorderwand 17 bis Rückwand 18 der Einhausung 2 erstreckt - wie beispielhaft in Fig. 3 dargestellt. Weiterhin können die Seitenbereiche 43, 44 der Abdeckplatte 40, welche den Reifenaufnahmebereich 41 begrenzen, bezogen auf den Einhausungsinnenraum 3 nach innen, also in Richtung des Inneren des Einhausungsinnenraums 3, gewölbt ausgeführt sein, damit Fremdpartikel aus der Umgebung bzw. aus einer gegebenfalls vorhandenen Rolleneinhausung 30 mit hoher Wahrscheinlichkeit gegen eine Unterseite der Abdeckplatte 40 geschleudert werden. Idealerweise ist eine Wölbung der Seitenbereiche 43, 44 an eine Krümmung der Rollenlauffläche 5a der Prüfstandrolle 5 angepasst, damit die Prüfstandrolle 5 während der Durchführung eines Prüflaufs nicht in ihrer Drehbewegung um die Rollendrehachse 9 behindert wird und weiterhin ein Spalt zwischen Prüfstandrolle 5 und Abdeckplatte 40 klein gehalten werden kann.

Die Abdeckplatte 40 kann beispielsweise, wie in Fig. 3 dargestellt, an der Einhausung 2 z.B. an der unteren Begrenzungswand 14 lösbar oder unlösbar fixiert sein. Dazu kann die Abdeckplatte 40 Montagebereiche 46, 47 aufweisen, welche beispielsweise an in Bezug zu dem Reifenaufnahmebereich 41 normal orientierten Enden der Abdeckplatte 40 vorgesehen sind.

Fig. 4a zeigt beispielhaft und schematisch eine perspektivische Detailansicht einer Ausführungsform der Abdeckplatte 40, welche in der Prüfstandanordnung 1 im Bereich der Rollenausnehmung 4 fixierbar ist. Die Abdeckplatte 40 weist den Reifenaufnahmebereich 41 mit der Ausnehmung 42 auf, welche durch die Seitenbereich 43, 44 begrenzt sind. Die beiden den Reifenaufnahmebereich 41 bzw. die Ausnehmung 42 begrenzenden Seitenbereiche 43, 44 sind gewölbt ausgeführt, wobei die Wölbung vorzugsweise an die Krümmung der Rollenlauffläche 5a der Prüfstandrolle 5 angepasst ist. Weiterhin ist aus Fig. 4a ersichtlich, dass Seitenbegrenzungen 45 des Reifenaufnahmebereichs 41, welche von jeweils dem Reifenaufnahmebereich 41 bzw. der Ausnehmung 42 zugewandten Begrenzungswänden der Seitenbereiche 43, 44 gebildet werden, im Bereich der Ausnehmung 42 bauchig bzw. bogenförmig ausgeführt sind, damit die Prüfstandrolle 5 während eines Prüfdurchlaufs ohne Hindernisse verschwenkt werden kann. "Bauchig" bzw. "bogenförmig" bedeutet dabei, die Ausnehmung 42 weist im Verlauf einer Längsrichtung des Reifenaufnahmebereichs 41 bzw. der Längsachse 40a der Abdeckplatte 40 eine unterschiedliche Breite b auf, wobei die Ausnehmung 42 die größte Breite b im Kontaktbereich zwischen dem zu prüfenden Reifen 6 und der Prüfstandrolle 5 bzw. der Reifenaufstandsfläche 13 parallel zur Reifendrehachse 7 aufweist. Weiterhin weist die Abdeckplatte 40 an den bezogen auf den Reifenaufnahmebereich 41 normal orientierten Enden die Montagebereiche 46, 47 auf, welche beispielsweise plan bzw. nicht gewölbt ausgeführt sind, damit die Abdeckplatte 40 einfach z.B. an der unteren Begrenzungswand 14 der Einhausung 2 lösbar oder unlösbar fixiert werden kann. Die Abdeckplatte 40 kann z.B. mittels Schraubverbindung fixiert sein. Es ist aber auch denkbar, dass die Abdeckplatte 40 nur auf der untere Begrenzungswand 14 angeordnet wird und aufgrund ihres Gewichts an ihrer Position in der Einhausung 2 gehalten wird. Es ist aber auch möglich, dass die Abdeckplatte 40 mittels Schweißen, Kleben, etc. an der unteren Begrenzungswand fixiert ist.

Alternativ kann die Abdeckplatte 40 in der Prüfungsanordnung 1 im Bereich der Rollenausnehmung 4 beweglich gelagert sein, damit die Abdeckplatte 40 bei einer Prüfstandanordnung 1 mit fixiertem Reifen 6 (nicht lenkbar) und lenkbarer Prüfstandrolle 5 (d.h. einer um die Hochachse HA schwenkbaren Prüfstandrolle 5) während der Durchführung eines Prüflaufs mitbewegt werden kann.

Fig. 4b zeigt beispielhaft und schematisch eine perspektivische Detailansicht einer Ausführungsform der Abdeckplatte 40, welche in der Prüfstandanordnung 1 im Bereich der Rollenausnehmung 4 beweglich lagerbar ist. Dazu weist die Abdeckplatte 40 eine Basisplatte 48 auf, welche im Bereich der Rollenausnehmung drehbar gelagert werden kann. Vorzugsweise ist die Basisplatte 48 kreisförmig ausgeführt, um leicht drehbar zu sein. Weiterhin weist die Abdeckplatte 40 wieder den Reifenaufnahmebereich 41 mit der Ausnehmung 42 auf, durch welche die Prüfstandrolle 5 in den Einhausungsinnenraum 3 hineinragt, damit der Reifen 6 bei Durchführung eines Prüflaufs auf der Rollenlauffläche 5a der Prüfstandrolle 5 abrollen kann.

Der Reifenaufnahmebereich 41 ist wieder durch die Seitenbereiche 43, 44 begrenzt, welche bezogen auf den Einhausungsinnenraum 3 nach innen gewölbt ausgeführt sind. Dabei ist die Wölbung der Seitenbereiche 43, 44 vorzugsweise wieder an die Krümmung der Rollenlauffläche 5a der Prüfstandrolle 5 angepasst. Zumindest in der Ruhestellung der Prüfstandanordnung 1 ist der Reifenaufnahmebereich 41 auch bei der beweglich gelagerten Abdeckplatte 40 in Strömungsrichtung der Luftströmung R in der Einhausung 2 ausgerichtet.

Bei der in Fig. 4b dargestellten, beweglich gelagerten Ausführungsform der Abdeckplatte 40 weist die Ausnehmung 42 z.B. eine konstante Breite b auf, welche sich z.B. nach der Reifenbreite der zu prüfenden Reifen 6 richtet. D.h., die Seitenbegrenzungen 45 des Reifenaufnahmebereichs 41 bzw. der Ausnehmung 42, welche von jeweils dem Reifenaufnahmebereich 41 bzw. der Ausnehmung 42 zugewandten Begrenzungswänden der Seitenbereiche 43, 44 gebildet werden, verlaufen im Verlauf der Längsrichtung des Reifenaufnahmebereichs 41 im Wesentlichen parallel zueinander.

Die Prüfstandanordnung 1 kann, wie bereits oben beschrieben, einen Rollenstellantrieb 27 (in Fig.2 gestrichelt angedeutet) aufweisen, durch welchen die Prüfstandrolle 5 bezogen auf den Reifen 6 verstellt werden kann, um einen Lenkeinschlag und/oder einen Reifensturz und/oder eine Aufstandskraft einzustellen. Die beweglich gelagerte Abdeckplatte 40 kann z.B. über eine Steuerung des Rollenstellantriebs 27 während der Durchführung eines Prüflaufs mit der Prüfstandrolle 5 mitgesteuert werden. D.h., wird die Prüfstandrolle 5, um einen Lenkeinschlag und/oder einen Reifensturz und/oder eine Aufstandskraft einzustellen, um die Hochachse HA geschwenkt, so wird die Abdeckplatte 40 entsprechend mitbewegt bzw. um die Hochachse HA mitgedreht.

Um die Partikelverluste und/oder den Fremdpartikeleintrag zusätzlich gering zu halten und um die die Luftströmung R in der Einhausung 2 zu verbessern, kann die zugeführte Zuluft auf eine Lauffläche 6a des Reifens 6 gerichtet werden. Gleichfalls ist es hinsichtlich einer Verbesserung der Luftströmung R vorteilhaft, wenn die in die Einhausung 2 zugeführte Zuluft in Richtung der Reifenaufstandsfläche 13 zugeführt wird. Die Zuluft strömt dann beispielsweise vom Mündungsbereich 11a der Zuluftleitung 11 vorzugsweise über den Reifenaufnahmebereich 41 der Abdeckplatte 40 in Strömungsrichtung der Luftströmung R zur Lauffläche 6a des Reifens 6 idealerweise zur Reifenaufstandsfläche 13.

Ebenfalls ist es hinsichtlich einer Verbesserung der Luftströmung R vorteilhaft, wenn die in die Einhausung 2 zugeführte Zuluft im Bereich des Bodens der Einhausung 2, der durch die Position der Rollenausnehmung 4 festgelegt ist, in die Einhausung 2 zugeführt wird. Weiterhin ist es hinsichtlich einer Verbesserung der Luftströmung R auch vorteilhaft, wenn die in die Einhausung 2 zugeführte Zuluft zumindest über die Reifenbreite der Reifens 6 zugeführt wird, vorzugsweise über die ganze Breite (in Richtung der Rollendrehachse 9 gesehen) der Einhausung 2 zugeführt wird. Dazu kann sich z.B. der Mündungsbereich 11a der Zuluftleitung 11, welcher in der einen Seitenwand 15 der Einhausung 2 angeordnet ist, über die gesamte Seitenwand 15 in Richtung der Rollendrehachse erstrecken, wie z.B. in Fig. 1 oder Fig. 3 dargestellt. Weiterhin kann der Mündungsbereich 11a der Zuluftleitung 11 (wie z.B. in Fig. 3 dargestellt) trichterförmig auf die Zuluftleitung 12 zusammenlaufend ausgestaltet sein.

Weiterhin kann auch der Mündungsbereich 12a der Abluftleitung 12, welcher in der anderen Seitenwand 16 angeordnet ist, hinsichtlich einer Verringerung der Abriebpartikelverluste gestaltet sein, sodass zusätzlich zur strömungsoptimiert ausgestalteten Abdeckplatte 40 Abriebpartikelverluste reduziert und verhindert werden. Dazu ist der Mündungsbereich 12a trichterförmig auf die Abluftleitung 12 zusammenlaufend ausgeführt sein. Der Mündungsbereich 12a der Abluftleitung 12 kann sich dabei zumindest über die Breite der Reifenaufstandsfläche 13 in Richtung der Rollendrehachse 9 erstrecken, vorteilhaft über die gesamte Breite der anderen Seitenwand 16 in Richtung der Rollendrehachse (wie in Fig.1 oder Fig. 3).

In einer möglichen Ausgestaltung ist die Einhausung 2 zumindest teilweise, beispielsweise bestimmte Begrenzungswände der Einhausung 2, aus einem elektrisch leitenden Material gefertigt und das elektrisch leitende Material mit einem elektrischen Bezugspunkt, wie einem Erdanschluss, verbunden, um bei Durchführung eines Prüflaufs mit der Prüfstandanordnung 1 elektrostatische Aufladung zu verhindern. Die Abdeckplatte 40 kann ebenfalls aus elektrisch leitendem Material gefertigt sein.

### Bezugszeichenliste

- 1: Prüfstandanordnung
- 2: Einhausung
- 3: Einhausungsinnenraum
- 4: Rollenausnehmung
- 5: Prüfstandrolle
- 5a: Rollenlauffläche
- 6: zu prüfender Reifen
- 6a: Lauffläche des zu prüfenden Reifens
- 7: Reifendrehachse
- 8: Rollenantrieb
- 9: Rollendrehachse
- 10: Prüfstandboden
- 11: Zuluftleitung
- 11a: Mündungsbereiche von Zuluftleitung
- 12: Abluftleitung
- 12a: Mündungsbereiche der Abluftleitung
- 13: Reifenaufstandsfläche
- 14: untere Begrenzungswand der Einhausung
- 15, 16: Seitenwände der Einhausung
- 17: Vorderwand der Einhausung
- 18: Rückwand der Einhausung
- 19: obere Begrenzungswand der Einhausung
- 20: Messgerät
- 21: Bogenabschnitt der oberen Begrenzungswand
- 22: Reifenantrieb
- 23: Zuluftgebläse
- 24: Abluftgebläse
- 25: Messleitung
- 26: Reifenstellantrieb
- 27: Rollenstellantrieb
- 30: Rolleneinhausung
- 40: Abdeckplatte
- 41: Reifenaufnahmebereich
- 42: Ausnehmung in der Abdeckplatte
- 43: erster Seitenbereich der Abdeckplatte
- 44: zweiter Seitenbereich der Abdeckplatte
- 45: Seitenbegrenzung der Ausnehmung
- 46, 47: Montagebereiche
- 48: drehbar gelagerte Basisplatte

- L: Luft
- R: Luftströmung in der Einhausung
- M: Messströmung
- HA: Hochachse
- b: Breite des Reifenaufnahmebereichs bzw. der Ausnehmung

## Patentansprüche

1. Prüfstandanordnung (1), insbesondere zur Ermittlung von Reifen- und/oder Bremsabrieb, wobei die Prüfstandanordnung (1) zumindest eine Einhausung (2) aufweist, die einen Einhausungsinnenraum (3) begrenzt, in welchem zumindest ein zu prüfender Reifen (6) um eine Reifendrehachse (7) drehbar anordenbar ist,
wobei an der Einhausung (2) eine Zuluftleitung (11) zum Zuführen von Luft (L) in den Einhausungsinnenraum (3) und eine Abluftleitung (12) zum Abführen von Luft (L) aus dem Einhausungsinnenraum (3) angeordnet sind, wobei die Abluftleitung (12) zumindest mit einem Messgerät (20) verbunden oder verbindbar ist;
wobei die Prüfstandanordnung (1) zumindest eine um eine Rollendrehachse(9) drehbare Prüfstandrolle (5) aufweist, welche durch eine Rollenausnehmung (4) in der Einhausung (2) zumindest teilweise in den Einhausungsinnenraum (3) hineinragt, und bei Durchführung eines Prüflaufs mit der Prüfstandanordnung (1) der zu prüfende Reifen (6) auf einer Rollenlauffläche (5a) der Prüfstandrolle (5) abrollt,
***dadurch gekennzeichnet, dass***
der Einhausungsinnenraum (3) auf Seiten der Prüfstandrolle (5) von einer die Rollenausnehmung (4) zumindest teilweise verdeckenden Abdeckplatte (40) mit einer normal zur Reifendrehachse (7) und/oder normal zur Rollendrehachse (9) verlaufenden Längsachse (40a) zumindest teilweise begrenzt wird, wobei die Abdeckplatte (40) einen entlang der Längsachse (40a) verlaufenden Reifenaufnahmebereich (41) mit einer Ausnehmung (42) und an den Reifenaufnahmebereich (41) anschließende, in Richtung der Längsachse (40a) verlaufende und einander hinsichtlich der Reifenaufnahmebereichs (41) gegenüberliegende Seitenbereiche (43, 44) aufweist, wobei der Reifenaufnahmebereich (41) gegenüber den Seitenbereichen (43, 44) vertieft ausgeführt ist und die Ausnehmung (42) zumindest denjenigen Bereich der Rollenlauffläche (5a) freigibt, auf dem der zu prüfende Reifen (6) während der Durchführung eines Prüflaufs abrollt.

2. Prüfstandanordnung (1) nach Anspruch 1, ***dadurch gekennzeichnet, dass*** die Seitenbereiche (43, 44), welche den Reifenaufnahmebereich (41) begrenzen, bezogen auf den Einhausungsinnenraum (3) nach innen gewölbt ausgeführt sind.

3. Prüfstandanordnung (1) nach Anspruch 2, ***dadurch gekennzeichnet, dass*** eine Wölbung der Seitenbereiche (43, 44) an eine Krümmung der Rollenlauffläche (5a) der zumindest einen Prüfstandrolle (5) angepasst ist.

4. Prüfstandanordnung (1) nach einem der Ansprüche 1 bis 3, ***dadurch gekennzeichnet, dass*** zumindest eine Seitenbegrenzung (45) der Ausnehmung (42), welche von einer der Ausnehmung (42) zugewandten Begrenzungswand eines Seitenbereichs (43, 44) gebildet ist, bauchig ausgestaltet ist.

5. Prüfstandanordnung (1) nach einem der Ansprüche 1 bis 4, ***dadurch gekennzeichnet, dass*** die Abdeckplatte (40) an einer unteren Begrenzungswand (14) der Einhausung (2), an welcher die Rollenausnehmung (4) ausgebildet ist, lösbar oder unlösbar fixiert angebracht ist.

6. Prüfstandanordnung (1) nach einem der Ansprüche 1 bis 5, ***dadurch gekennzeichnet, dass*** die Abdeckplatte (40) in der Prüfstandanordnung (1) im Bereich der Rollenausnehmung (4) beweglich gelagert ist.

7. Prüfstandanordnung (1) nach einem der Ansprüche 1 bis 6, ***dadurch gekennzeichnet, dass*** die Abdeckplatte eine Basisplatte (48) aufweist, welche im Bereich der Rollenausnehmung (4) drehbar gelagert oder lagerbar ist.

8. Prüfstandanordnung (1) nach Anspruch 7, ***dadurch gekennzeichnet, dass*** die Basisplatte (48) kreisförmig ausgestaltet ist.

9. Prüfstandanordnung (1) nach einem der Ansprüche 6 bis 8, ***dadurch gekennzeichnet, dass*** die Prüfungsanordnung (1) einen Rollenstellantrieb (27) aufweist, wobei die Abdeckplatte (40) während der Durchführung eines Prüflaufs mit der Prüfstandanordnung (1) bei Betätigung des Rollenstellantriebs (27) mitsteuerbar ist.
